# EUROPEAN PATENT APPLICATION

(11) **EP 1 721 912 A1**
(43) Date of publication of application: **15.11.2006**
(21) Application number: 05710580.1
(22) Date of filing: 23.02.2005
(51) Int. Cl.: C08F 4/48, C08F 8/00

(54) **PROCESS FOR PRODUCING POLYMER WITH FUNCTIONAL END**

(30) Priority: 01.03.2004 JP 2004056341
(71) Applicant: KURARAY CO., LTD., Kurashiki-shi, Okayama 710-8622 (JP)
(72) Inventor: SATOH, Kotaro, KURARAY CO., LTD., Tsukuba-shi, Ibaraki 3050841 (JP); KATO, Toshinori, KURARAY CO., LTD., Tsukuba-shi, Ibaraki 3050841 (JP)
(74) Representative: Müller-Boré & Partner Patentanwälte
(86) International application number: PCT/JP2005/002887
(87) International publication number: WO 2005/082946

(57) **Abstract**

An organolithium compound represented by the following general formula (i): (i) [wherein A represents a heteroatom selected among oxygen, nitrogen, sulfur, and phosphorus; Ar represents optionally substituted aryl; R¹ represents C₁₋₁₀ alkyl; R² represents C₁₋₁₀ alkylene; R³ represents C₁₋₁₀ alkyl or a protective group for the functional group -A-H (A is a heteroatom); and when the heteroatom A is oxygen or sulfur, then m and n each is 0 or 1, provided that the sum of m and n is 1, and when the heteroatom A is nitrogen or phosphorus, then m and n each is 0, 1, or 2, provided that the sum of m and n is 2], which has not hitherto been used in anionic polymerization, is used as an anionic polymerization initiator to easily and smoothly produce a polymer having a functional group at an end.

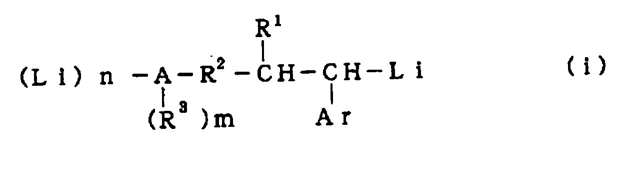

## Description

### Technical Field

The present invention relates to: an end-functionalized polymer; a method for producing the same; a functionalized anionic polymerization initiator used for the production of the end-functionalized polymer; and a method for producing the same. More specifically, the present invention relates to: a method for easily and smoothly producing a polymer having a functional group at an end by using a specific organolithium compound which has not heretofore been used in anionic polymerization as an anionic polymerization initiator; and a functionalized anionic polymerization initiator used for the production.
An end-functionalized polymer, which is produced by a method according to the present invention wherein the polymer is anionically polymerized with such a functionalized anionic polymerization initiator as stated above, can be effectively used for various applications including an adhesive, a sealant, a coating material, a film, a tire, a thermoplastic part, a thermosetting part, and others.

### Background Art

An end-functionalized polymer has heretofore been used for various applications, but the effects and physical properties of the functional group cannot sufficiently be obtained unless the number of the functional end-groups and the distribution of the molecular weight are controlled. In addition, when a radical polymerization method is adopted as the production method, the produced polymer often has a wide molecular weight distribution and contains a polymer of an extremely low molecular weight or a polymer not having a functional group at an end, and thus the quality of the polymer is hardly stabilized. In contrast, when an anionic polymerization method, a living anionic polymerization method in particular, is adopted, the reaction can be controlled and hence a polymer having a narrow molecular weight distribution and a well-defined structure is liable to be obtained.

In living anionic polymerization, methods of reacting a living anionic chain end with a functional capping agent and thus introducing a functional group onto the polymer end are known (refer to Patent Documents 1 to 3 and others). However, any of the methods disclosed in Patent Documents 1 to 3 is a method of applying living anionic polymerization with a polymerization initiator, thereafter reacting a living anionic chain end with a functional capping agent, and thus introducing a functional group onto the polymer end. Therefore, a functional group cannot be introduced directly onto a polymer end by the living anionic polymerization, a process of reacting the end with a functional capping agent is essentially required after the polymerization, and hence the processes are complicated. Another drawback in the methods disclosed in Patent Documents 1 to 3 is that, even when a compound, such as organodilithium, having two or more initiation sites is used as the polymerization initiator, the sites have to be reacted with a functional capping agent after living anionic polymerization is applied and, in that case, when one of the growth ends undergoes termination reaction, the functional group is introduced only onto another end and thus it is difficult to combine two or more different kinds of functional end-groups and introduce them into one polymer chain.

As other methods for introducing a functional group onto a polymer end, methods of applying living anionic polymerization with a specific organolithium system polymerization initiator having a functional group are known (refer to Patent Documents 4 to 6 and others). In the cases of the methods disclosed in Patent Documents 4 to 6, it is possible to introduce inevitably one functional group onto an end of the initiation of polymerization reaction and a telechelic polymer is obtained when a coupling agent or a functional capping agent is used in combination. In particular, when a functional capping agent is used in combination, it is possible to produce a heterotelechelic polymer having functional groups different from each other at two ends. In the cases of the methods disclosed in Patent Documents 4 to 6 however, the operation in the preparation of a polymerization initiator used for living anionic polymerization is complicated and moreover an alkali metal which has the risk of explosion or the like during the preparation of the polymerization initiator and thus is inferior in handleability must be directly used. An additional problem is that, since a byproduct such as metal halide is produced during the preparation of the polymerization initiator, the prepared polymerization initiator cannot be used directly for living anionic polymerization without purification and must be used after being refined by filtration or another means.

As yet other methods, methods of: preparing an organolithium polymerization initiator wherein a functional group binds to an aromatic ring by reacting an organolithium compound not having a functional group with a styrene derivative having a functional group protected by a siloxy group; applying anionic polymerization with the organolithium polymerization initiator; and thus producing a polymer having the functional group are known (refer to Patent Documents 7 and 8). In the cases of the methods disclosed in Patent Documents 7 and 8 however, the styrene derivative used in the preparation of the polymerization initiator is liable to be polymerized, and hence the problems here are that two or more functional groups are liable to be introduced into the polymerization initiator and that a polymer not having a functional group is abundantly contained as a byproduct in a polymer produced when the polymer is anionically polymerized with the prepared polymerization initiator.

Further, methods of producing a polymer having a functional group by applying anionic polymerization with a functional group containing organolithium polymerization initiator prepared by reacting an organolithium compound with an 1,1-diphenylethylene derivative formed by bonding a functional group to an aromatic ring are known (refer to Patent Document 9 and Non-patent Document 1). In the case of the method disclosed in Patent Document 9 or Non-patent Document 1, although it is possible to produce a polymer which has effectively introduced a functional group onto an initiation end, the operation in the preparation of the 1,1-diphenylethylene derivative having a functional group is complicated and costly, and thus it is impossible to produce a polymer having a functional group easily at a low cost.

Patent Document 1: U.S. Patent No. 4,417,029,
Specification
Patent Document 2: U.S. Patent No. 4,518,753,
Specification
Patent Document 3: U.S. Patent No. 4,753,991,
Specification
Patent Document 4: JP-A No. 504164/1993
Patent Document 5: JP-A No. 505351/1997
Patent Document 6: JP-A No. 268012/1995
Patent Document 7: JP-A No. 336505/1994
Patent Document 8: U.S. Patent No. 5,336,726,
Specification
Patent Document 9: JP-A No. 58505/1990
Non-patent Document 1: "Makromol. Chem.," Macromol. Symp. (1992), Vol. 63, p 259-269

### Disclosure of the Invention

### Problem to be Solved by the Invention

An object of the present invention is to provide a method which allows a polymer having a functional group at an end to be easily, smoothly and directly obtained by applying anionic polymerization even when multi-step reaction processes of: applying anionic polymerization with a polymerization initiator; thereafter further reacting the growth end thereof with a functional capping agent; and thus introducing a functional group onto the polymer end, are not applied.
Another object of the present invention is to provide a method for producing an end-functionalized polymer economically through a simple process by using a specific functionalized anionic polymerization initiator that has not heretofore been used.
Yet another object of the present invention is to provide a method which allows an end-functionalized polymer to be easily and economically produced by: preparing an organolithium type polymerization initiator having a functional group more easily than ever at a low cost not with an alkali metal which has the risk of explosion or the like and is inferior in handleability but with a stable organolithium compound; and using the prepared organolithium type polymerization initiator for the anionic polymerization in the state of reaction product mixture without purification even when the prepared organolithium type polymerization initiator is not isolated or refined from the reaction product mixture.
Still another object of the present invention is to provide: a specific functionalized anionic polymerization initiator useful for the production of an end-functionalized polymer; and a method that allows the functionalized anionic polymerization initiator to be easily produced.

Still another object of the present invention is to provide a method for easily and efficiently producing an end-functionalized polymer, which does not cause the problems in: that two or more functional groups are introduced into a polymerization initiator in the event of the preparation of the polymerization initiator having a functional group; and moreover that a polymer not having a functional group is abundantly formed as a byproduct in a polymer produced when anionic polymerization is applied with the polymerization initiator having a functional group.
Still another object of the present invention is to provide an end-functionalized polymer that is produced by the aforementioned method and can be effectively used for various applications.

### Means of Solving the Problem

The present inventors have intensively studied in order to attain the above objects. As a result, the present inventors have found that a functionalized anionic polymerization initiator can be prepared easily and efficiently by reacting an organolithium compound with a specific β-substituted styrene derivative formed by bonding a functional group to the ω position through an alkylene group and that an end-functionalized polymer can be directly produced through anionic polymerization when anionic polymerization is applied with the functional anionic polymerization initiator even though multi-step processes of reacting the living anionic chain end with a functional capping agent after anionic polymerization are not applied.
The present inventors have further found that, although the functionalized anionic polymerization initiator prepared as stated above can also be used after being isolated: it is not necessarily required to use the polymerization initiator for anionic polymerization after the polymerization initiator is isolated or refined from a reaction product mixture; it is possible to directly use the reaction product mixture containing the polymerization initiator without purification for anionic polymerization; and, in that case too, an intended end-functionalized polymer can be produced smoothly with a high yield.

Then the present inventors: have found that, when the living anionic chain end produced with such a specific functional anionic polymerization initiator as stated above is reacted with a specific functional capping agent or a multi-functional coupling agent, it is possible to convert the functional group at the end of the end-functionalized polymer into various types of functional groups, and thus the applications and performance of the end-functionalized polymer can be further diversified; and have established the present invention on the basis of the findings.

That is, the present invention includes:

(1) a method for producing an end-functionalized polymer, wherein an anionically polymerizable monomer is anionically polymerized by using as a polymerization initiator an organolithium compound represented by the following general formula (i); 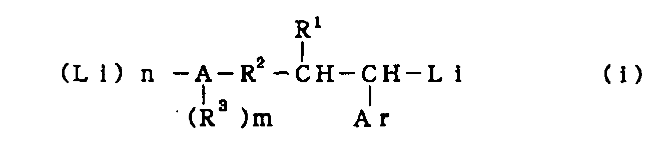
wherein: A represents a heteroatom selected from among an oxygen atom, a nitrogen atom, a sulfur atom, and a phosphorus atom; Ar represents an optionally substituted aryl group; R¹ represents a C₁₋₁₀ alkyl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2.

The present invention further includes:
(2) a method for producing an end-functionalized polymer, wherein a β-substituted styrene derivative represented by the following general formula (ii); 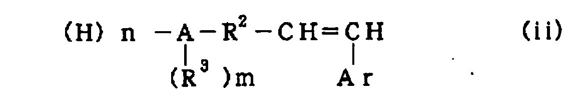 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii);

   R¹ - Li (iii),

   wherein R¹ represents a C₁₋₁₀ alkyl group, while the amount of the organolithium compound represented by the general formula (iii) is controlled to more than n moles (here, n represents the same numeral as n expressed in the general formula (ii)) per one mole of the β-substituted styrene derivative represented by the general formula (ii), and thereafter an anionically polymerizable monomer is anionically polymerized under the existence of the obtained reaction product mixture.

The present invention further includes:
(3) a production method according to the above item (2), wherein the β-substituted styrene derivative represented by the general formula (ii) is reacted with the organolithium compound represented by the general formula (iii), while the amount of the organolithium compound is controlled to more than n moles to not more than (n+1) moles (here, n represents the same numeral as n expressed in the general formula (ii)) per one mole of the β-substituted styrene derivative, and thereafter an anionically polymerizable monomer is anionically polymerized under the existence of the obtained reaction product mixture;
(4) a production method according to any one of the above items (1) to (3), wherein the production method further includes a process of reacting the living anionic chain end with at least one kind of functional capping agent selected from among an alkylene oxide compound, a carbonyl compound, an imine compound, a mercapto compound, and epichlorohydrin; and
(5) a production method according to any one of the above items (1) to (3), wherein the production method further includes a process of reacting a multi-functional coupling agent with living anionic chain end.

The present invention further includes:
(6) a functionalized anionic polymerization initiator represented by the following general formula (i); 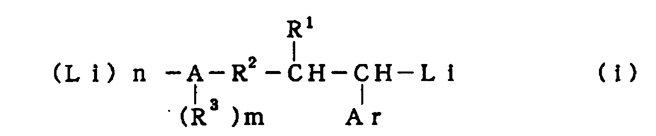 wherein: A represents a heteroatom selected from among an oxygen atom, a nitrogen atom, a sulfur atom, and a phosphorus atom; Ar represents an optionally substituted aryl group; R¹ represents a C₁₋₁₀ alkyl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2.

The present invention further includes:
(7) a method for producing a functionalized anionic polymerization initiator, wherein a β-substituted styrene derivative represented by the following general formula (ii): 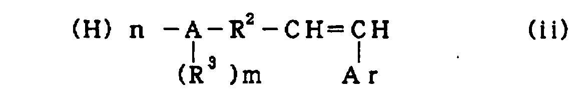 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii):

   R¹ - Li (iii),

   wherein R¹ represents a C₁₋₁₀ alkyl group, while the amount of the organolithium compound is controlled to more than n moles (here, n represents the same numeral as n expressed in the general formula (ii)) per one mole of the β-substituted styrene derivative.

The present invention further includes:
(8) a method for producing a functionalized anionic polymerization initiator, wherein a β-substituted styrene derivative represented by the following general formula (ii); 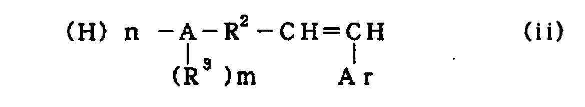 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii);

   R¹ - Li (iii),

   wherein R¹ represents a C₁₋₁₀ alkyl group, while the amount of the organolithium compound is controlled to more than n moles to not more than (n+1) moles (here, n represents the same numeral as n expressed in the general formula (ii)) per one mole of the β-substituted styrene derivative.

The present invention further includes:
(9) an end-functionalized polymer produced by the production method according to any one of the above items (1) to (5).

### Effect of the Invention

By a method according to the present invention, an end-functionalized polymer can be produced easily, efficiently, and directly through an anionic polymerization process by using an organolithium compound represented by the aforementioned general formula (i) or a reaction product mixture obtained by reacting a β-substituted styrene derivative represented by the aforementioned general formula (ii) with an organolithium compound represented by the aforementioned general formula (iii), without the application of multi-step reaction processes of: applying anionic polymerization with a polymerization initiator; thereafter further reacting the living anionic chain end thereof with a functional capping agent; and thus introducing a functional group onto the polymer end.
By a method according to the present invention further, an end-functionalized polymer can be produced easily and economically by: preparing an organolithium type polymerization initiator having a functional group more easily than ever at a low cost not with an alkali metal which has the risk of explosion or the like and is inferior in handleability but with a stable organolithium compound; and using the prepared organolithium type polymerization initiator in the state of a reaction product mixture without purification while the prepared organolithium type polymerization initiator is not isolated or isolated and refined from the reaction product mixture.
By a method according to the present invention furthermore, an end-functionalized polymer can be produced easily and efficiently without causing the problem in that a polymer not having a functional group is abundantly formed as a byproduct in a polymer produced when anionic polymerization is applied.

A functionalized anionic polymerization initiator according to the present invention: can be easily produced by reacting a β-substituted styrene derivative represented by the aforementioned general formula (ii) with an organolithium compound represented by the aforementioned general formula (iii); and moreover can be effectively used for the production of an end-functionalized polymer.
Further, an end-functionalized polymer produced by a method according to the present invention can be effectively used for various applications including, for example, an adhesive, a sealant, a coating material, molded articles such as a film and others, a modifier to improve the impact resistance, the flexibility, and the like of another polymer, and others.

### Best Mode for Carrying Out the Invention

The present invention is hereunder explained in detail.

The present invention includes a method for directly producing an end-functionalized polymer by anionically polymerizing an anionically polymerizable monomer with a polymerization initiator comprising an organolithium compound (hereunder referred to as "an organolithium compound (i)" represented by the following general formula (i); 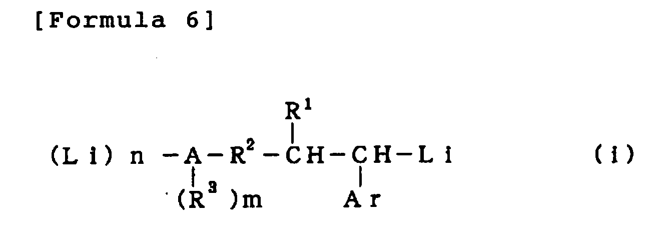 wherein: A represents a heteroatom selected from among an oxygen atom, a nitrogen atom, a sulfur atom, and a phosphorus atom; Ar represents an optionally substituted aryl group; R¹ represents a C₁₋₁₀ alkyl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2.

In an organolithium compound (i), A may be any heteroatom selected from among an oxygen atom, a nitrogen atom, a sulfur atom, and a phosphorus atom. In particular, A is preferably an oxygen atom or a nitrogen atom from the viewpoints of the easiness of production, polymerization initiating capability, the reactivity of an obtained polymer, and others.
Further, Ar is an aryl group that may optionally have a substituent group and, as concrete examples of Ar, there are: a phenyl group; a phenyl group having one or more substituent groups such as an alkyl group, halogen, and an alkoxyl group; a naphthyl group; and others. Among those, a phenyl group, a phenyl group substituted with an alkyl group, especially a phenyl group not substituted is preferable from the viewpoints of the smoothness in the production of an intended end-functionalized polymer, the easiness in the production of an organolithium compound (i), and others.

In an organolithium compound (i), R¹ is a linear or branched C₁₋₁₀ alkyl group and, as concrete examples of R¹, there are a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, an 1-methyl butyl group, an 1-methyl heptyl group, a hexyl group, a heptyl group, an octyl group, a nonyl group, a decyl group, and others. Among those, from the viewpoints of availability, economical efficiency, the easiness in the production of an organolithium compound (i), the easiness in the production of an end-functionalized polymer, and others, R¹ is preferably a linear or branched C₁₋₅ alkyl group, and more preferably a propyl group, a butyl group, an isobutyl group, a sec-butyl group, a tert-butyl group, a methyl group, or an ethyl group.

In an organolithium compound (i), R² is a linear or branched C₁₋₁₀ alkylene group and, as concrete examples of R², there are a methylene group, an ethylene group, a linear or branched propylene group, a butylene group, a pentylene group, a hexylene group, a heptylene group, an octylene group, a nonylene group, and others. Among those, from the viewpoints of the easiness in the production of an organolithium compound (i), the easiness in the production of an end-functionalized polymer, and others, R² is preferably a linear C₁₋₄ alkylene group, and more preferably a methylene group, an ethylene group, a propylene group, and a butylene group.

In an organolithium compound (i), R³ is a C₁₋₁₀ alkyl group or a protective group for the functional group -A-H (A is the aforementioned heteroatom). As concrete examples of R³ in the case where R³ is a C₁₋₁₀ alkyl group, there are a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, an 1-methyl butyl group, an 1-methyl heptyl group, a hexyl group, a heptyl group, an octyl group, a nonyl group, a decyl group, and others. Then as concrete examples of R³ in the case where R³ is a protective group for the functional group -A-H, there are: an alkyl silyl group such as a trimethyl silyl group, a tert-butyl dimethyl silyl group, and an isopropyl dimethyl silyl group; a benzyl group; and others. In the case where R³ is a C₁₋₁₀ alkyl group, each of a tert-butyl group, an isopropyl group, an isoamyl group, and the like functions also as a protective group for the functional group -A-H. In the case where R³ is a trimethyl silyl group, a tert-butyl dimethyl silyl group, or a tert-butyl group in particular, it well functions as a protective group.
Among those, from the viewpoints of the easiness in the production of an organolithium compound (i), the availability of a material compound for the production of an organolithium compound (i), the easiness in the production of an end-functionalized polymer, and others, R³ is preferably a linear or branched C₁₋₅ alkyl group, a trimethyl silyl group, a tert-butyl dimethyl silyl group, or a benzyl group, and more preferably a tert-butyl group, a trimethyl silyl group, or a tert-butyl dimethyl silyl group.

In an organolithium compound (i), when the heteroatom A is an oxygen atom or a sulfur atom, then m and n are 0 or 1 respectively and the sum of m and n is 1. When the heteroatom A is an oxygen atom or a sulfur atom, it is preferable that m is 0 and n is 1, from the viewpoints of the easiness in the production of an organolithium compound (i), the availability of a material compound (particularly a β-substituted styrene derivative represented by the aforementioned general formula (ii)) for the production of an organolithium compound (i), and others.
In an organolithium compound (i), when the heteroatom A is a nitrogen atom or a phosphorus atom, then m and n are 0, 1, or 2 respectively and the sum of m and n is 2. When the heteroatom A is a nitrogen atom or a phosphorus atom, m and n may take any of the cases where m is 0 and n is 2, m is 1 and n is 1, and m is 2 and n is 0, in accordance with the type of the functional group to be introduced onto an end of a polymer.

As concrete examples of the organolithium compound (i) usable in the present invention, there are the compounds represented by the following formulae (ia) to (ik), though the organolithium compounds (i) usable in the present invention are not limited to those examples.

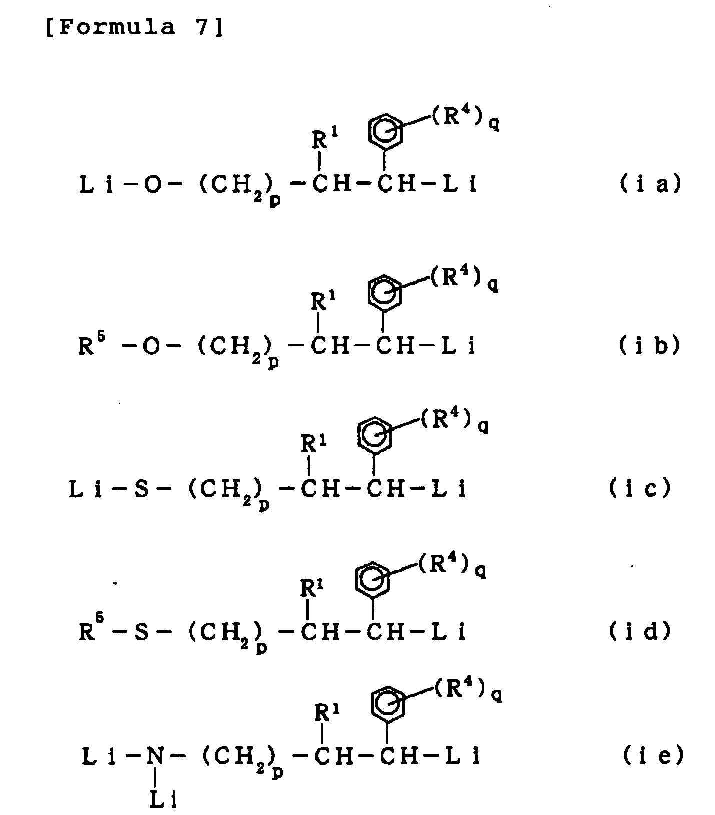

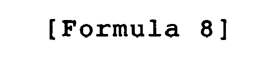

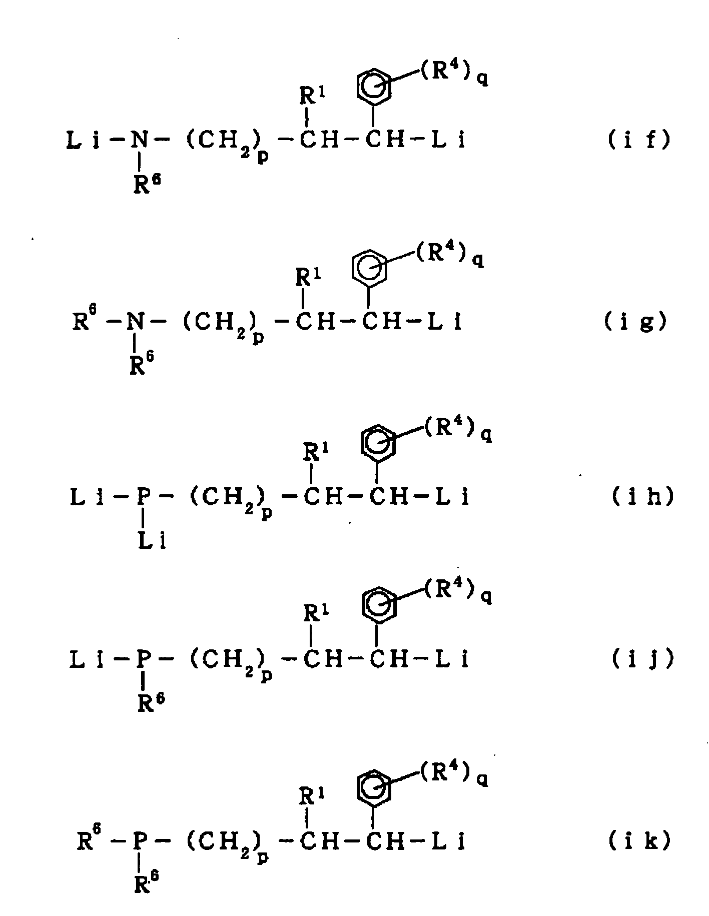

In the above formulae, preferably, R¹ and R⁴ represent linear or branched C₁₋₄ alkyl groups, R⁵ and R⁶ represent linear or branched C₁₋₄ alkyl groups or alkyl silyl groups, p represents an integer of 1 to 5, and q represents an integer of 0 to 3.

As an organolithium compound (i) in the present invention, an organolithium compound having an oxygen atom or a nitrogen atom as the heteroatom A in the aforementioned general formula (i) is preferably used from the viewpoints of the easiness in the production of an organolithium compound (i), polymerization initiating capability, the reactivity of an obtained polymer, and others, and therefore an organolithium compound represented by the above formula (ia), (ib), (ie), (if), or (ig) is preferably used. Among those, as an organolithium compound (i) in the present invention, an organolithium compound having a butyl group or a sec-butyl group as R¹, 0 as q, and an integer of 1 to 4 as p in the above formula (ia) or an organolithium compound having a butyl group or a sec-butyl group as R¹, a C₁₋₄ alkyl group as R⁶, 0 as q, and an integer of 1 to 4 as p in the above formula (ie), (if), or (ig) is preferably used.

A method for producing an organolithium compound (i) is not particularly limited, but the organolithium compound (i) can be smoothly produced by reacting a β-substituted styrene derivative (hereunder referred to as "a β-substituted styrene derivative (ii)") represented by the following general formula (ii);

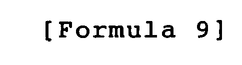

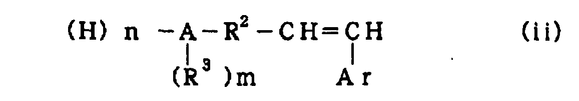

wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, with an organolithium compound (hereunder referred to as "an organolithium compound (iii)") represented by the following general formula (iii);

R¹ - Li (iii),

wherein R¹ represents a C₁₋₁₀ alkyl group, while the amount of the organolithium compound (iii) is controlled to more than n moles (here, n represents the same numeral as n expressed in the general formula (ii)) per one mole of the β-substituted styrene derivative (ii).

An organolithium compound (i) produced by reacting a β-substituted styrene derivative (ii) with an organolithium compound (iii) may be isolated or isolated/refined from the reaction product mixture and used as an anionic polymerization initiator to produce an end-functionalized polymer; or the reaction product mixture containing the organolithium compound (i) may be used without purification for anionic polymerization to produce an end-functionalized polymer
Even when a reaction product mixture obtained by reacting a β-substituted styrene derivative (ii) with an organolithium compound (iii) is used without purification for anionic polymerization, it is possible to produce an intended end-functionalized polymer smoothly with a high yield without causing polymerization inhibition or the like.

The present invention therefore includes: not only a method for producing an end-functionalized polymer by applying anionic polymerization while an isolated or isolated/refined organolithium compound (i) is used as a polymerization initiator; but also a method for producing an end-functionalized polymer by applying anionic polymerization while a reaction product mixture obtained by reacting a β-substituted styrene derivative (ii) with an organolithium compound (iii) is used without purification.
In the case of the latter method of applying anionic polymerization while a reaction product mixture containing an organolithium compound (i) obtained by reacting a β-substituted styrene derivative (ii) with an organolithium compound (iii) is used without purification, the processes of isolating and refining the organolithium compound (i) from the reaction product mixture are not required and it is possible to produce an end-functionalized polymer more easily.

In a β-substituted styrene derivative (ii) represented by the aforementioned general formula (ii), the types (contents), the concrete examples, and the preferable examples of the heteroatom A, Ar, R² and R³, the preferable numerical values of m and n, and others are the same as the heteroatom A, Ar, R², R³, m, and n explained in the organolithium compound (i).
As concrete examples of the β-substituted styrene derivative (ii), there are the compounds represented by the following formulae (iia) to (iik), though β-substituted styrene derivatives (ii) are not limited to those examples.

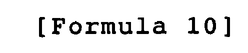

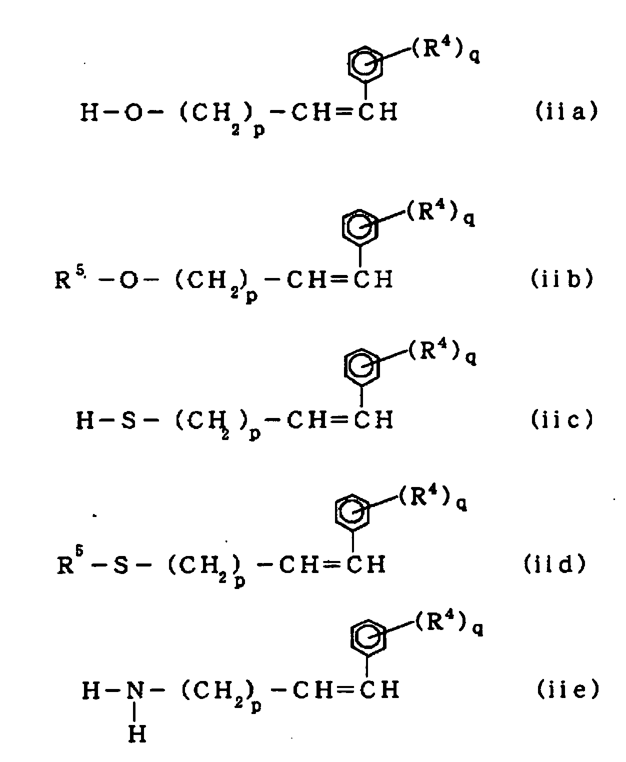

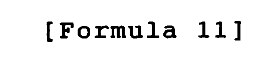

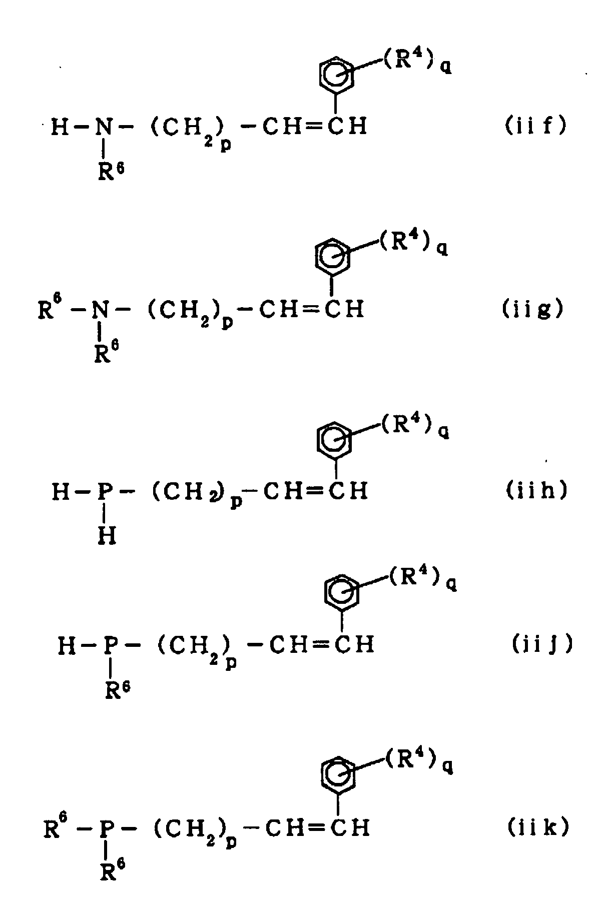

In the above formulae, preferably, R⁴ represents a linear or branched C₁₋₄ alkyl group, R⁵ and R⁶ represent linear or branched C₁₋₄ alkyl groups or alkyl silyl groups, p represents an integer of 1 to 5, and q represents an integer of 0 to 3.

As a β-substituted styrene derivative (ii) in the present invention, an organolithium compound having an oxygen atom or a nitrogen atom as the heteroatom A in the aforementioned general formula (ii) is preferably used from the viewpoints of the production easiness and availability of the β-substituted styrene derivative (ii), the reactivity with the organolithium compound (iii), the polymerization initiating capability of an obtained organolithium compound (i), the reactivity of an obtained polymer, and others, and therefore a β-substituted styrene derivative (ii) represented by the above formula (iia), (iib), (iie), (iif), or (iig) is preferably used. Among those, as a β-substituted styrene derivative (ii) in the present invention, an organolithium compound having an n-butyl group or an sec-butyl group as R¹, 0 as q, and an integer of 1 to 4 as p in the above formula (iia) or an organolithium compound having an n-butyl group or an sec-butyl group as R¹, a C₁₋₄ alkyl group as R⁶, 0 as q, and an integer of 1 to 4 as p in the above formula (iie), (iif), or (iig) is preferably used.

As preferable concrete examples of the β-substituted styrene derivative (ii) having an oxygen atom as the heteroatom A in the above general formula (ii), there are cinnamyl alcohol (3-phenyl-2-propene-l-ol'), 4-phenyl-3-butene-l-ol, 5-phenyl-4-pentene-1-ol, 6-phenyl-5-hexene-l-ol, 7-phenyl-6-heptene-1-ol, 4-phenyl-3-butene-2-ol, 2-methyl-4-phenyl-3-butene-1-ol, 5-phenyl-4-pentene-2-ol, and others.

As preferable concrete examples of the β-substituted styrene derivative (ii) having a nitrogen atom as the heteroatom A in the above general formula (ii), there are: primary amines such as cinnamyl amine (3-phenyl-2-propenylamine), 4-phenyl-3-butenylamine, 5-phenyl-4-pentenylamine, 6-phenyl-5-hexenylamine, 7-phenyl-6-peptenylamine, 1-methyl-3-phenyl-2-propenylamine, 2-methyl-4-phenyl-3-butenylamine, and others; secondary amines such as N-methyl cinnamyl amine (N-methyl-(3-phenyl-2-propenyl)-amine), N-ethyl cinnamyl amine (N-ethyl-(3-phenyl-2-propenyl)-amine), N-propyl cinnamyl amine (N-propyl-(3-phenyl-2-propenyl)-amine), N-butyl cinnamyl amine (N-butyl-(3-phenyl-2-propenyl)-amine), N-methyl-(4-phenyl-3-butenyl)-amine, N-ethyl-(4-phenyl-3-butenyl)-amine, N-propyl-(4-phenyl-3-butenyl)-amine, N-butyl-(4-phenyl-3-butenyl)-amine, and others; and tertiary amines such as N,N-dimethyl cinnamyl amine (N,N-dimethyl-(3-phenyl-2-propenyl)-amine), N,N-diethyl cinnamyl amine (N,N-diethyl-(3-phenyl-2-propenyl)-amine), N,N-dipropyl cinnamyl amine (N,N-dipropyl-(3-phenyl-2-propenyl)-amine), N,N-dibutyl cinnamyl amine (N,N-dibutyl-(3-phenyl-2-propenyl)-amine), N,N-dimethyl-(4-phenyl-3-butenyl)-amine, N,N-diethyl-(4-phenyl-3-butenyl)-amine, N,N-dipropyl-(4-phenyl-3-butenyl)-amine, N,N-dibutyl-(4-phenyl-3-butenyl)-amine, and others.

In an organolithium compound (iii) reacting with a β-substituted styrene derivative (ii), the type (content), the concrete examples, the preferable examples, and others of the group R¹ are the same as those of the R¹ explained in the organolithium compound (i). As preferable concrete examples of the organolithium compound (iii), there are butyllithium, sec-butyllithium, tert-butyllithium, and others, and those compounds may be used individually or two or more kinds of the compounds may be used in combination.
Among those, sec-butyllithium is preferably used from the viewpoint of the easiness in the production of an organolithium compound (i).

In the reaction between a β-substituted styrene derivative (ii) and an organolithium compound (iii), in general: the reaction firstly occurs between an active hydrogen atom (a hydrogen atom bonding to the heteroatom A) in the β-substituted styrene derivative (ii) and the organolithium compound (iii), and the part of the active hydrogen atom is lithiated; successively a single molecular organolithium compound (iii) undergoes addition reaction with the ethylenic unsaturated bond of the β-substituted styrene derivative (ii); and thus an organolithium compound (i) represented by the aforementioned general formula (i) is produced.
An organolithium compound (i) which has a functional group (-A(Li)n(R³)m) at an end formed through the reaction between a β-substituted styrene derivative (ii) and an organolithium compound (iii) functions as a polymerization initiator during anionic polymerization and introduces a functional group onto an end of a polymer.
Further, in the case where an unreacted organolithium compound (iii) remains in a reaction product mixture obtained through the reaction between a β-substituted styrene derivative (ii) and an organolithium compound (i), when anionic polymerization is carried out with the reaction product mixture, not only the organolithium compound (i) but also the unreacted organolithium compound (iii) function as a polymerization initiator and hence a polymer not having a functional group at an end is simultaneously formed together with an end-functionalized polymer.

In view of the above situation, when a β-substituted styrene derivative (ii) reacts with an organolithium compound (iii), in order to surely form an organolithium compound (i) represented by the aforementioned general formula (i) through the addition reaction of a single molecular organolithium compound (iii) with the ethylenic unsaturated bond of the β-substituted styrene derivative (ii), it is necessary to react the organolithium compound (iii) with the β-substituted styrene derivative (ii) while the amount of the organolithium compound (iii) is controlled to more than n moles (n is the same as the number n of the active hydrogen atoms H bonding to the heteroatom A in a β-substituted styrene derivative (ii) represented by the aforementioned general formula (ii)) per one mole of the β-substituted styrene derivative (ii).

Further, in order to produce an end-functionalized polymer which does not include or scarcely includes a polymer not having a functional group at an end by: using a reaction product mixture obtained through the reaction between a β-substituted styrene derivative (ii) and an organolithium compound (iii) without purification; and applying anionic polymerization, it is preferable to control the amount of the used organolithium compound (iii) to not more than (n+1) moles (n is the number of the active hydrogen atoms H bonding to the heteroatom A in a β-substituted styrene derivative (ii) as stated above) per one mole of the β-substituted styrene derivative (ii) so that an unreacted organolithium compound (iii) may not remain in the reaction product mixture used as a polymerization initiator or the amount of the remaining unreacted organolithium compound (iii) may be reduced to a minimum.

Consequently, in the event of the reaction between a β-substituted styrene derivative (ii) and an organolithium compound (iii), it is necessary to use the organolithium compound (iii) at a ratio of more than n moles (n is the same as stated above) to one mole of the β-substituted styrene derivative (ii). A preferable value thereof is more than n moles to not more than (n+1) moles, and yet preferable value thereof is (n+1) moles.

It is preferable to carry out the reaction between a β-substituted styrene derivative (ii) and an organolithium compound (iii) in an organic solvent in order to smoothly forward the reaction. The organic solvent is not particularly limited and any organic solvent is acceptable as long as it has no reactivity with a carbanion. Most of all, a nonpolar solvent is preferably used. As examples of a preferable organic solvent, there are: a solvent of aliphatic hydrocarbon such as cyclohexane, methylcyclohexane, n-hexane, n-heptane, or the like; and a solvent of aromatic hydrocarbon such as benzene, toluene, xylene, or the like. Those compounds may be used individually or two or more kinds of the compounds may be used in combination.

The amount of an organic solvent used for the reaction between a β-substituted styrene derivative (ii) and an organolithium compound (iii) is not particularly limited and an appropriate amount can be selected in accordance with conditions including the solubility or dispersibility of a produced organolithium compound (i), the amount and type of a monomer added thereafter, and others. In general however, a preferable amount of an organic solvent is about 1 to 100 liters per one mole of a β-substituted styrene derivative (ii).

A small amount of a polar compound may be added in order to accelerate the reaction between a β-substituted styrene derivative (ii) and an organolithium compound (iii) and further improve the solubility of an organolithium compound (i) produced through the reaction in the solvent when the β-substituted styrene derivative (ii) and the organolithium compound (iii) react with each other in a nonpolar solvent. As a polar compound, a compound which does not have a functional group (a hydroxyl group, a carbonyl group, or the like) reacting with an anion but has hetero atoms such as an oxygen atom, a nitrogen atom, and others in the molecule is preferably used and, as the examples, there are diethyl ether, monoglyme, diglyme, N,N,N',N'-tetramethyl ethylenediamine, dimethoxy ethane, tetrahydrofuran, and others. Those compounds may be used individually or two or more kinds of the compounds may be used in combination.

The temperature when a β-substituted styrene derivative (ii) and an organolithium compound (iii) react with each other is preferably in the range of -80°C to 60°C, and more preferably in the range of 0°C to 50°C, from the viewpoints of not increasing the time required for the reaction and suppressing side reaction.

The operation when a β-substituted styrene derivative (ii) and an organolithium compound (iii) react with each other is not particularly limited but it is preferable to: prepare a solution by dissolving the β-substituted styrene derivative (ii) in an organic solvent (preferably a nonpolar hydrocarbon solvent); slowly add an organic solvent solution (preferably a nonpolar hydrocarbon solution) of an organolithium compound thereto by dropping while the solution is stirred at a prescribed temperature; and thus secure sufficient reaction while the stirring of the reacting mixed liquid is continued for an arbitrary time even after the end of the addition.
In the reaction between a β-substituted styrene derivative (ii) and an organolithium compound (iii), since active hydrogen atoms (hydrogen atoms bonding to the heteroatom A) in the β-substituted styrene derivative (ii) are firstly lithiated and thereafter the addition reaction of the organolithium compound (iii) to an unsaturated ethylene bond progresses as stated above, it is preferable to add the organolithium compound (iii) sufficiently slowly by dropping until the active hydrogen atoms are completely lithiated.
The extent of the reaction between a β-substituted styrene derivative (ii) and an organolithium compound (iii) can be confirmed by gas chromatography (GC), proton nuclear magnetic resonance spectroscopy (¹H-NMR), and others.
In general, it is preferable to carry out the reaction in the range of 0.1 to 40 hours.
It is preferable to sufficiently dehydrate and dry beforehand the compounds to be used for the reaction, such as a β-substituted styrene derivative (ii), an organolithium compound (iii), an organic solvent, a polar compound, and the like.
Further, it is preferable to carry out the reaction between a β-substituted styrene derivative (ii) and an organolithium compound (iii) in an atmosphere of an inert gas, such as a nitrogen gas, an argon gas, or the like, not containing moisture and oxygen.

The anionic polymerization of an anionically polymerizable monomer is commenced by using: an organolithium compound (i); or a reaction product mixture formed through the reaction between a β-substituted styrene derivative (ii) and an organolithium compound (iii) without purification, and thus an end-functionalized polymer is produced.
The end-functionalized polymer produced through the above processes is a linear or branched polymer having at least one functional end-group, and includes a telechelic polymer and a heterotelechelic polymer each of which has reactive functional groups at both ends, an end-functionalized radial polymer having a functional group derived from a functional anionic polymerization initiator at an end, and others.

The type of an anionically polymerizable monomer used for the production of an end-functionalized polymer is not particularly limited and any of the monomers which have anionic polymerizability and are used for ordinary living anionic polymerization can be used. As examples of an anionically polymerizable monomer which can be used in the present invention, there are: aromatic vinyl compounds such as styrene, α-methyl styrene, *o*-methyl styrene, m-methyl styrene, p-methyl styrene, 4-propyl styrene, 2,4-dimethyl styrene, vinyl naphthalene, vinyl anthracene, and others; conjugated alkadiene compounds such as 1,3-butadiene, isoprene, 2,3-dimethyl-1,3-butadiene, 3,4-dimethyl-1,3-pentadiene, 1,3-cyclohexadiene, and others; acrylic acid ester compounds such as methyl acrylate, ethyl acrylate, n-propyl acrylate, i-propyl acrylate, n-butyl acrylate, phenyl acrylate, benzyl acrylate, and others; methacrylic acid ester compounds such as methyl methacrylate, ethyl methacrylate, n-propyl methacrylate, i-propyl methacrylate, n-butyl methacrylate, phenyl methacrylate, benzyl methacrylate, and others; nitrile compounds such as acrylonitrile, methacrylonitrile, and others; hetero aromatic vinyl compounds such as 2-vinyl pyridine, and others; vinyl silane compounds such as vinyl trimethylsilane, and others; lactone compounds such as ε-caprolactone, and others; silicon-contained heterocyclic compounds such as hexamethyl cyclotrisiloxane, and others; and others. Those monomers may be used individually or two or more kinds of the monomers may be used in combination.

When an end-functionalized polymer is produced from two or more kinds of anionically polymerizable monomers by a method according to the present invention, the shape of the bonding of each monomer in the polymer (copolymer) obtained through the polymerization is not particularly limited, and any of a block shape, a random shape, and a tapered shape can be adopted. For example, when a linear or branched block copolymer having a functional group at an end is produced, the block copolymer can be produced by: commencing the polymerization of a first monomer while an organolithium compound (i) or a reaction product mixture obtained through the reaction between a β-substituted styrene derivative (ii) and an organolithium compound (iii), those acting as anionic polymerization initiators, is added to the polymerization system; continuing the polymerization for a prescribed time; then completely polymerizing the first monomer; thereafter forwarding the polymerization while adding a second monomer; and further repeating the polymerization reaction sequentially if needed. As the examples of a linear block copolymer having a functional group at an end obtained by a method according to the present invention, there are a polystyrene-polyisoprene-polystyrene block copolymer having a functional group at an end, a polystyrene-polybutadiene-polystyrene block copolymer having a functional group at an end, a polystyrene-polyisoprene block copolymer having a functional group at an end, a polystyrene-polybutadiene block copolymer having a functional group at an end, and others.

The amount of an anionically polymerizable monomer used for the production of an end-functionalized polymer can be determined stoichiometrically in accordance with the molecular weight of an intended end-functionalized polymer to be produced and other factors. The molecular weight of an intended end-functionalized polymer is not particularly limited and, by a method according to the present invention, it is possible to produce an end-functionalized polymer having a molecular weight ranging, for example, from 1,000 to 500,000 in terms of number average molecular weight.

It is preferable to carry out anionic polymerization reaction in an organic solvent in order to smoothly advance the reaction. When anionic polymerization is carried out using a reaction product mixture formed through the reaction between a β-substituted styrene derivative (ii) and an organolithium compound (iii) without purification, it is possible to use the organic solvent contained in the reaction product mixture without purification, and another organic solvent may be added if needed. Further, when polymerization is carried out using an isolated or isolated/refined organolithium compound (i) as a polymerization initiator, it is preferable to carry out the polymerization while the polymerization initiator, a monomer, and others are dissolved in an organic solvent.

An organic solvent used during polymerization is not particularly limited and any organic solvent can be used as long as it has no reactivity with a carbanion existing at the living anionic chain end. However, a nonpolar organic solvent is preferably used and, as the examples, there are: aliphatic hydrocarbons such as cyclohexane, methylcyclohexane, n-hexane, n-heptane, and others; aromatic hydrocarbons such as benzene, toluene, xylene, and others; and others. Those compounds may be used individually or two or more kinds of the compounds may be used in combination.

A small amount of a polar compound may be added to a polymerization system during the polymerization of a monomer before the monomer is added in order to improve the solubility of a polymerization initiator such as an organolithium compound (i) in an organic solvent and smoothly forward the polymerization. As a polar compound when it is added, a compound not having a functional group (a hydroxyl group, a carbonyl group, or the like) reacting with a carbanion but having hetero atoms such as an oxygen atom, a nitrogen atom, and others in the molecule may be used in the same way as the compound is used in the reaction between a β-substituted styrene derivative (ii) and an organolithium compound (iii). As concrete examples thereof, there are diethyl ether, monoglyme, diglyme, N,N,N',N'-tetramethyl ethylenediamine, dimethoxy ethane, tetrahydrofuran, and others.

A polymerization temperature is preferably in the range of -80°C to 100°C, and industrially in the range of 0°C to 60°C, from the viewpoints of not increasing the time required for the reaction and suppressing side reaction pursuant to a means adopted in ordinary living anionic polymerization.
The operation during polymerization reaction is not particularly limited but it is preferable to: slowly add an anionically polymerizable monomer thereto by dropping while stirring an organic solvent solution dissolving and containing an organolithium compound (i) or a reaction product mixture obtained through the reaction between a β-substituted styrene derivative (ii) and an organolithium compound (iii) at a prescribed temperature; and thus secure sufficient polymerization while the stirring of the reacting mixed liquid is continued for an arbitrary time even after the end of the addition.
The extent of the polymerization reaction can be confirmed by gas chromatography (GC), proton nuclear magnetic resonance spectroscopy (¹H-NMR), and others.
It is preferable that the polymerization time is generally in the range of 0.1 to 100 hours.
It is preferable to sufficiently dehydrate and dry beforehand the compounds to be used for the polymerization reaction such as an anionically polymerizable monomer, a polymerization initiator, an organic solvent, a polar compound, and the like. Further, it is preferable to carry out the polymerization in an atmosphere of an inert gas, such as a nitrogen gas, an argon gas, or the like, not containing moisture and oxygen.

In general, through such anionic polymerization as stated above, a polymer having a group (hereunder referred to as "a group (iv)" occasionally) represented by the following general formula (iv) at the polymerization initiating end and a carbanion at the living anionic chain end is produced. By adding a protic compound such as methanol, ethanol, propanol, acetic acid, or the like as a polymerization terminator to the produced polymer, the carbanion at the living anionic chain end is converted to hydrogen and the propagation (polymerization) of the polymer terminates;

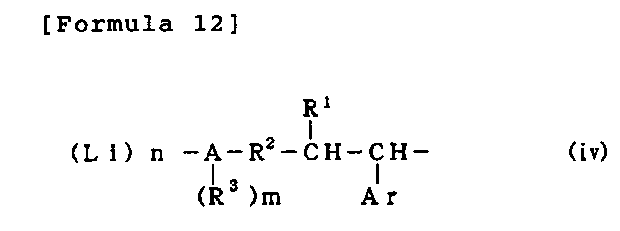

wherein A, Ar, R¹, R², and R³ are the same groups as stated earlier and m and n are the same numerals as stated earlier.

In a polymer produced through such anionic polymerization, when R³ is a protective group for a functional group -A-H (for example: an alkylsilyl group such as a trimethylsilyl group, a t-butyl dimethylsilyl group, an isopropyl dimethylsilyl group, or the like; a benzyl group; or the like) or an alkyl group working as a protective group (for example, a t-butyl group, an isopropyl group, an isoamyl group, or the like) and m is 1 or 2 (when a functional group protected by the above protective group exists) in the group (iv) bonding to the polymerization initiating end, it is possible to form a functional group at the initiating end of the polymer by deprotecting the polymer after the end-functionalized polymer is produced. As a deprotecting agent in this case for example, a protonic acid compound such as hydrochloric acid, sulfonic acid, carboxylic acid, or the like; a Lewis acid compound such as boron trifluoride, tin tetrachloride, or the like; an alkaline fluorine-ion-containing compound such as tetrabutyl ammonium fluoride, ammonium fluoride, potassium fluoride, or the like; or the like can be used. Among those, a protonic acid compound such as hydrochloric acid, sulfonic acid, or the like is preferably used from the viewpoint of the easiness of deprotection reaction.

Further, in an end-functionalized polymer produced through such anionic polymerization, when n is 1 or 2 and an end is lithiated in the group (iv) bonding to the polymerization initiating end, it is possible to form a functional group at the initiating end of the polymer by delithiating the end. In general, the delithiation can be carried out by converting lithium to hydrogen with a protic compound such as methanol, ethanol, propanol, acetic acid, or the like.

In the above case, by reacting a living anionic chain end with an appropriate functional capping agent in place of adding a protic compound (a polymerization terminator) such as methanol to a polymer produced through anionic polymerization and converting the carbanion at the growth end to hydrogen, it is possible to produce a (hetero) telechelic polymer having functional groups at both the polymerization initiating end and the living anionic chain end. The capping reaction of a living anionic chain end can be processed pursuant to a means adopted in ordinary living anionic polymerization and, by selecting the type of a functional capping agent, it is possible to introduce a functional group such as a hydroxyl group, a carboxyl group, an amino group, an epoxy group, a mercapto group, a sulfonyl group, a halogen atom, a vinyl group, a vinylidene group, or the like to the growth end of a polymer.

As examples of a functional capping agent which can introduce a hydroxyl group to the living anionic chain end, there are: alkylene oxide compounds such as ethylene oxide, propylene oxide, trimethylene oxide, butylene oxide, styrene oxide, and others; aldehyde compounds such as formaldehyde, acetaldehyde, propionaldehyde, n-butylaldehyde, and others; ketone compounds such as acetone, methyl ethyl ketone, diethyl ketone, and others and the derivatives thereof; and an oxygen atom.

As an example of a functional capping agent that can introduce a carboxyl group to the living anionic chain end of a polymer, there is carbon dioxide.
As examples of a functional capping agent that can introduce an amino group to the living anionic chain end of a polymer, there are imine compounds such as ethyleneimine, propyleneimine, cyclohexeneimine, and others.
As examples of a functional capping agent that can introduce a mercapto group to the living anionic chain end of a polymer, there are carbon disulfide, ethylene sulfide, propylene sulfide, a sulfur atom, and others.
As examples of a functional capping agent that can introduce a halogen atom to the living anionic chain end of a polymer, there are a chlorine atom, a bromine atom, and others. As examples of a capping agent that can introduce an epoxy group to the living anionic chain end of a polymer, there are epichlorohydrin and others. As examples of a capping agent that can introduce a sulfonyl group to the living anionic chain end of a polymer, there are propanesultone and others.

In the above case further, by reacting a living anionic chain end with an appropriate multi-functional coupling agent in place of adding a protic compound (a polymerization terminator) such as methanol to a polymer produced through anionic polymerization and converting the carbanion at the growth end to hydrogen, it is possible to produce a telechelic polymer having functional groups derived from an organolithium compound (i) at all the ends or an end-functionalized radial polymer. Such an end-functionalized polymer thus obtained may be a mixture containing a one-end-functionalized polymer, a telechelic polymer and/or an end-functionalized radial polymer at an arbitrary ratio, the mixture being obtained by adjusting the amount of a multi-functional coupling agent to be used.

A multi-functional coupling agent in this case can be selected appropriately pursuant to a means adopted in ordinary living anionic polymerization and, as the examples thereof, there are phenyl benzoate, methyl benzoate, ethyl benzoate, ethyl acetate, methyl acetate, methyl pivalate, phenyl pivalate, ethyl pivalate, α,α'-dichloro-o-xylene, α,α'-dichloro-m-xylene, α,α'-dichloro-p-xylene, bis(chloromethyl) ether, dibromomethane, diiodomethane, dimethyl phthalate, dichlorodimethyl silane, dichlorodiphenyl silane, trichloromethyl silane, tetrachlorosilane, divinyl benzene, and others.

An end-functionalized polymer produced by the above method according to the present invention can be used: as an adhesive, a coating material, a sealant, and others which have heretofore been known as the applications of an end-functionalized polymer; and also as a modifier to modify a polymer such as polyurethane, polyester, polyamide, polycarbonate, epoxy resin, or the like.

Among the end-functionalized polymers obtained by the methods according the present invention, in particular a telechelic polymer having functional groups at both the ends: can be effectively used as an adhesive (including a pressure sensitive adhesive, a contact adhesive, a laminate adhesive, and an assembly adhesive), a sealant (for example, an architectural urethane sealant or the like), a coating material (for example, a top coat for an automobile, an epoxy primer for metal, a polyester coil coating material, an alkyd maintenance coating material, or the like); and further can be used for the production of a film (for example, a film requiring heat resistance and resistance to solvent), various kinds of thermoplastic resin molded articles and thermosetting resin molded articles (for example, a thermoplastic polyurethane roller formed by injection molding or the like, a thermosetting resin automobile bumper formed by reaction injection molding, a partition board, and the like), and others. Further, an end-functionalized polymer obtained by a method according to the present invention can be suitably used for the above applications as a composition containing the polymer.

Further, an end-functionalized polymer produced by a method according to the present invention may be blended with another polymer as a modifier to improve impact resistance and/or flexibility. As examples of another polymer in this case, there are polyamide, polyurethane, poly(vinyl alcohol)s, poly(vinyl ester)s, polysulfone, polycarbonate, polyester, polyacetone having a repetitive ester bond in the molecule, polyalkylene allyl ether including polyalkylene terephthalate having a structure formed through condensation polymerization of dicarboxylic acid and glycol, a condensation polymer including polyester, and others.
A composition comprising an end-functionalized polymer and another polymer may be prepared by: adding another polymer during the production processes of the end-functionalized polymer; or mixing another polymer after the end-functionalized polymer is produced.

### Examples

The present invention is hereunder explained concretely in reference to examples and others but is not limited at all by the following examples and others.
In the examples below: the extent of reaction in the processes of the production of an organolithium compound (i) or a reaction product mixture containing it and the production of an end-functionalized polymer produced by using either of them; the number average molecular weight and the molecular weight distribution of a produced end-functionalized polymer; the introduction rate of functional groups in an end-functionalized polymer; and the measurement or the identification of a functionalized anionic polymerization initiator and an organolithium compound were carried out by the following methods.

(1) The extent of reaction between a β-substituted styrene derivative (ii) and an organolithium compound (iii)
   The extent of reaction was measured with a gas chromatograph (GC) (GC-14A manufactured by Shimadzu Corporation) and/or a proton nuclear magnetic resonance spectrometer (¹H-NMR) (JNM-LA400 manufactured by JEOL DATUM Ltd.).
(2) The extent of polymerization reaction of a monomer
   The extent of polymerization reaction was measured with the GC and/or the ¹H-NMR described above.
(3) The number average molecular weight and the molecular weight distribution of an end-functionalized polymer
   They were measured with a gel permeation chromatograph (GPC) (HLC-8020 manufactured by Tosoh Corporation) wherein a peak molecular weight was calibrated with known polystyrene standards (solvent: tetrahydrofuran, temperature: 40°C).
(4) The introduction rate of functional groups in an end-functionalized polymer
   The introduction rate was measured with a thin layer chromatograph (TLC) (TLC Aluminum Sheet Silica Gel 60 F254 manufactured by Merck Ltd.), a high performance liquid chromatograph (HPLC) (LC-10AD manufactured by Shimadzu Corporation), or a matrix assisted laser desorption ionization mass spectrometer (MALDI-TOF-MS) (Vorager-DE STR manufactured by Applied Biosystems).
(5) The identification of a functional anionic polymerization initiator and an organolithium compound
   In a glove box of a nitrogen atmosphere, a prepared initiator was sampled into a glass tube for NMR measurement, dissolved in deuterated cyclohexane sufficiently dehydrated and refined (C₆D₁₂: manufactured by Wako Pure Chemical Industries, Ltd.), and measured with the aforementioned ¹H-NMR.

Production Example 1: Production of an organolithium compound (ia) and a reaction product mixture containing the organolithium compound (ia)
(1) After a gas in a dried glass reaction vessel was replaced with a nitrogen gas, 268 mg (2.0 millimoles) of cinnamyl alcohol was put into the reaction vessel, successively 19 ml of cyclohexane and 6 ml of hexane were put into the reaction vessel as a solvent, and thus the cinnamyl alcohol was dissolved. The obtained solution was cooled to a temperature of 0°C in the reaction vessel while the solution was stirred, and thereafter 4.2 ml of a cyclohexane solution of sec-butyllithium (4.0 millimoles as sec-butyllithium) was slowly added by dropping while spending 5 minutes. The reaction was continued further for 24 hours while the temperature in the reaction vessel was maintained at 0°C and the stirring was continued, and a reddish brown liquid dispersion (hereunder referred to as "a reaction product mixture (ia)" occasionally) was obtained.
(2) A part of the liquid dispersion (the reaction product mixture) obtained in the above process (1) was sampled, diluted with deuterated cyclohexane, and measured with the ¹H-NMR. As a result, it was confirmed that: the peak of an ethylenic unsaturated bond derived from the cinnamyl alcohol disappeared completely; in contrast the peaks derived from -CH₂-O-Li, -CH(Phe)-Li, and - CH(sec-Bu)- appeared at the positions in the vicinities of 3.5 ppm, -0.014 ppm, and 1.9 ppm, respectively; the whole amount of the cinnamyl alcohol reacted; and an organolithium compound (i) (hereunder referred to as "an organolithium compound (ia)" or "a functionalized anionic polymerization initiator (ia)") having an oxygen atom as A, a phenyl group as Ar, a sec-butyl group as R¹, an methylene group as R², 0 as m, and 1 as n in the aforementioned general formula (i) was produced.
(3) Further, the liquid dispersion (the reaction product mixture) after the completion of the measurement in the above process (2) was processed with a small amount of isopropanol and the liquid after the process was measured with the ¹H-NMR and the GC. As a result, it was confirmed that: the cinnamyl alcohol was not recognized in any of the measurements; and moreover the peaks derived from - CH₂-OH, -CH₂(Phe), and -CH(sec-Bu)- appeared at the positions in the vicinities of 4.3 ppm, 2.5 ppm, and 1.9 ppm, respectively. From the fact too, it was further confirmed that the extent of the reaction (the reaction rate) between the cinnamyl alcohol and the sec-butyllithium was 100%.

Comparative Measurement Example 1: ¹H-NMR measurement of sec-butyllithium
A cyclohexane solution of sec-butyllithium was diluted with deuterated cyclohexane and subjected to ¹H-NMR measurement. As a result, the peak derived from -CH-Li appeared as a sextet approximately - 0.097 ppm and no peak was observed approximately - 0.014 ppm.

Production Example 2: Production of a reaction product mixture containing an organolithium compound (ia) and sec-butyllithium
(1) Reaction was carried out in the same way as the process (1) of Production Example 1 except that the amount of a cyclohexane solution of sec-butyllithium used in the process (1) of Production Example 1 was changed to 6.3 ml (6.0 millimoles as sec-butyllithium), and a reddish brown liquid dispersion (a reaction product mixture) was obtained.
(2) A part of the liquid dispersion (the reaction product mixture) obtained in the above process (1) was sampled, diluted with deuterated cyclohexane, and measured with the ¹H-NMR. As a result, it was confirmed that: the peak of an ethylenic unsaturated bond derived from the cinnamyl alcohol disappeared; in contrast the peaks derived from -CH₂-O-Li, -CH(Phe)-Li, and -CH(sec-Bu)-appeared at the positions in the vicinities of 3.5 ppm, -0.014 ppm, and 1.9 ppm, respectively; the whole amount of the cinnamyl alcohol reacted; and an organolithium compound (i) (hereunder referred to as "an organolithium compound (ia)" or "a functionalized anionic polymerization initiator (ia)" occasionally) having an oxygen atom as A, a phenyl group as Ar, a sec-butyl group as R¹, an methylene group as R², 0 as m, and 1 as n in the aforementioned general formula (i) was produced. Further from an NMR spectrum, it was confirmed that a peak was observed also approximately -0.097 ppm and unreacted sec-butyllithium was contained in the reaction product mixture solution.
(3) Further, the liquid dispersion (the reaction product mixture) after the completion of the measurement in the above process (2) was processed with a small amount of isopropanol and the liquid after the process was measured with the ¹H-NMR and the GC. As a result, it was confirmed that: the cinnamyl alcohol was not recognized in any of the measurements; and moreover the peaks derived from - CH₂-O-H, -CH₂(Phe), and -CH(sec-Bu)- appeared at the positions in the vicinities of 4.3 ppm, 2.5 ppm, and 1.9 ppm, respectively. From the fact too, it was further confirmed that the extent of the reaction (the reaction rate) between the cinnamyl alcohol and the sec-butyllithium was 100%.

Production Example 3: Production of a reaction product mixture containing an organolithium compound (ib)
(1) After a gas in a dried glass reaction vessel was replaced with a nitrogen gas, 380 mg (2.0 millimoles) of N,N-diethyl cinnamyl amine was put into the reaction vessel, successively 19 ml of cyclohexane and 6 ml of hexane were put into the reaction vessel as a solvent, and thus the N,N-diethyl cinnamyl amine was dissolved. The obtained solution was cooled to a temperature of 0°C in the vessel while the solution was stirred, and thereafter 2.1 ml of a cyclohexane solution of sec-butyllithium (2.0 millimoles as sec-butyllithium) was slowly added by dropping while spending 5 minutes. The reaction was continued further for 24 hours while the temperature in the vessel was maintained at 0°C and the stirring was continued, and a uniform orange solution (hereunder referred to as "a reaction product mixture (ib)" occasionally) was obtained.
(2) A part of the solution (the reaction product mixture) obtained in the above process (1) was sampled, diluted with deuterated cyclohexane, and measured with the ¹H-NMR. As a result, it was confirmed that: the peak of an ethylenic unsaturated bond derived from the N,N-diethyl cinnamyl amine disappeared; in contrast the peaks derived from - CH(Phe)-Li and -CH(sec-Bu)- appeared at the positions of -0.014 ppm and 1.9 ppm, respectively; the whole amount of the N,N-diethyl cinnamyl amine reacted; and an organolithium compound (i) (hereunder referred to as "an organolithium compound (ib)" or "a functionalized anionic polymerization initiator (ib)") having a nitrogen atom as A, a phenyl group as Ar, a sec-butyl group as R¹, an methylene group as R², an ethyl group as R³, 2 as m, and 0 as n in the aforementioned general formula (i) was produced.
(3) Further, the solution (the reaction product mixture) after the completion of the measurement in the above process (2) was processed with a small amount of isopropanol and the liquid after the process was measured with the ¹H-NMR and the GC. As a result, it was confirmed that: the N,N-diethyl cinnamyl amine was not recognized in any of the measurements; and moreover the peaks derived from - CH₂(Phe) and -CH(sec-Bu)- appeared at the positions in the vicinities of 2.5 ppm and 1.9 ppm, respectively. From the fact too, it was further confirmed that the extent of the reaction (the reaction rate) between the N,N-diethyl cinnamyl amine and the sec-butyllithium was 100%.

Production Example 4: Production of a reaction product mixture containing an organolithium compound (ib)
(1) After a gas in a dried glass reaction vessel was replaced with a nitrogen gas, 380 mg (2.0 millimoles) of N,N-diethyl cinnamyl amine was put into the reaction vessel, successively 19 ml of cyclohexane and 6 ml of hexane were put into the reaction vessel as a solvent, and thus the N,N-diethyl cinnamyl amine was dissolved. The obtained solution was cooled to a temperature of 0°C in the vessel while the solution was stirred, and thereafter 1.0 ml of a cyclohexane solution of sec-butyllithium (1.0 millimole as sec-butyllithium) was slowly added by dropping while spending 5 minutes. The reaction was continued further for 6 hours while the temperature in the vessel was maintained at 0°C and the stirring was continued, and a uniform orange solution (a reaction product mixture) was obtained.
(2) A part of the solution (the reaction product mixture) obtained in the above process (1) was sampled, diluted with deuterated cyclohexane, and measured with the ¹H-NMR. As a result, it was confirmed that 47% of ethylenic unsaturated bonds in the N,N-diethyl cinnamyl amine reacted from the proportion of the ethylenic unsaturated bonds in the N,N-diethyl cinnamyl amine. Further, the peaks derived from -CH(Phe)-Li and -CH(sec-Bu)- appeared at the positions of -0.014 ppm and 1.9 ppm, respectively, and as a result a reaction product mixture containing an organolithium compound (ib) and unreacted N,N-diethyl cinnamyl amine was obtained.

Comparative Production Example 1: Reaction product mixture from cinnamyl alcohol and sec-butyllithium
(1) Reaction was carried out in the same way as the process (1) of Production Example 1 except that the amount of a cyclohexane solution of sec-butyllithium used in the process (1) of Production Example 1 was changed to 2.1 ml (2.0 millimoles as sec-butyllithium) and an uneven white solution (a reaction product mixture) was obtained.
(2) One ml of the solution (the reaction product mixture) obtained in the above process (1) was sampled, diluted with deuterated cyclohexane, and measured with the ¹H-NMR. As a result, the peak of an ethylenic unsaturated bond derived from the cinnamyl alcohol existed in the same state as before the reaction and did not disappear (decrease). In contrast, the peak derived from -CH₂-O-Li appeared at the position of 3.5 ppm but no peak existed approximately -0.014 ppm. From the result, it was confirmed that, in the reaction between cinnamyl alcohol and sec-butyllithium, the reaction with sec-butyllithium firstly occurred on the side of an alcoholic hydroxyl group and, when surplus sec-butyllithium remained after the reaction, successively the ethylenic unsaturated bond of the cinnamyl alcohol underwent the addition reaction with the surplus sec-butyllithium.

Example 1: Production of polystyrene having a hydroxyl group at an end
(1) Anionic polymerization was carried out by: controlling the temperature in a reaction vessel containing a reaction product mixture (a reaction product mixture containing an organolithium compound (ia)) (about 28 ml) produced through the same operation as described in the process (1) of Production Example 1 to 40°C; and thereafter adding 11.5 ml (100 millimoles) of a styrene monomer. The liquid in the reaction vessel gradually changed from the state of uneven reddish brown to a uniform reddish brown solution and sedimentation occurred to some extent. After the polymerization reaction was continued for 2 hours at 40°C, 1 ml of methanol was added to the liquid after the reaction and thus the polymerization was terminated. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby polystyrene formed through polymerization was precipitated, and the produced polystyrene was recovered, dried, and thereafter subjected to GPC measurement. As a result, the number average molecular weight (Mn) was 26,200 and the molecular weight distribution (Mw/Mn) was 1.10. Assuming that 1 molecule of polystyrene was formed per 1 molecule of an organolithium compound (ia) produced through the reaction between cinnamyl alcohol and sec-butyllithium, the efficiency of the organolithium compound (ia) as a polymerization initiator was 20%.
   Further, the number of end hydroxyl groups in the produced polystyrene was measured with the HPLC and resultantly was 1.0 per one molecule.

Example 2: Production of polystyrene having a hydroxyl group at an end
(1) Anionic polymerization was carried out in the same way as the process (1) of Example 1 except that the temperature when the styrene monomer was added in the process (i) of Example 1 was initially set to 0°C, the anionic polymerization was forwarded for 10 minutes at 0°C, and thereafter the temperature of the vessel was raised to 40°C, and then the polymerization reaction was terminated in the same way as the process (1) of Example 1. During the polymerization, the liquid in the reaction vessel gradually changed from the state of uneven reddish brown to a uniform reddish brown solution having no sedimentation. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby polystyrene formed through polymerization was precipitated, and the produced polystyrene was recovered, dried, and thereafter subjected to GPC measurement. As a result, the number average molecular weight (Mn) was 13,000 and the molecular weight distribution (Mw/Mn) was 2.29. Assuming that 1 molecule of polystyrene was formed per 1 molecule of an organolithium compound (ia) produced through the reaction between cinnamyl alcohol and sec-butyllithium, the efficiency of the organolithium compound (ia) as a polymerization initiator was 41%.
   Further, the number of end hydroxyl groups in the produced polystyrene was measured with the HPLC and the MALDI-TOF-MS, and resultantly was 0.95 per one molecule.

Example 3: Production of telechelic polystyrene having hydroxyl groups at both the ends
(1) Polystyrene was produced through the same operation as described in the processes (1) and (2) of Example 1 except that 1 ml of propylene oxide was added before the reaction was terminated with methanol in the process (1) of Example 1.
(2) The polystyrene produced through the above process (1) was subjected to GPC measurement. As a result, the number average molecular weight (Mn) was 26,200 and the molecular weight distribution (Mw/Mn) was 1.10. Assuming that 1 molecule of polystyrene was formed per 1 molecule of an organolithium compound (ia) produced through the reaction between cinnamyl alcohol and sec-butyllithium, the efficiency of the organolithium compound (ia) as a polymerization initiator was 20%.
   Further, the number of end hydroxyl groups in the produced polystyrene was measured with the HPLC and resultantly was 1.95 s per one molecule, and thus it was confirmed that the produced polystyrene had hydroxyl groups at both the ends.

Example 4: Production of polyisoprene having a hydroxyl group at an end
(1) Anionic polymerization was carried out by: controlling the temperature in a reaction vessel containing a reaction product mixture (about 28 ml) containing an organolithium compound (ia) produced through the same operation as described in the process (1) of Production Example 1 to 40°C: and thereafter adding 10 ml (100 millimoles) of an isoprene monomer. The liquid in the vessel gradually changed from the state of uneven reddish brown to uniform light yellow and sedimentation occurred to some extent. After the polymerization reaction was continued for 3 hours at 40°C, 1 ml of methanol was added to the liquid after the reaction and thus the polymerization was terminated. The liquid after the reaction was analyzed with the GC and the ¹H-NMR. As a result, no unreacted isoprene monomer was detected and the monomer conversion rate was 100%.
(2) The liquid after reaction obtained in the above process (1) was put into an excessive amount of methanol, thereby polyisoprene produced through polymerization was precipitated, and the produced polyisoprene was recovered, dried, and thereafter subjected to ¹H-MMR measurement. As a result, the number average molecular weight (Mn) was 26,000 and the molecular weight distribution (Mw/Mn) obtained through GPC measurement was 1.10. Assuming that 1 molecule of polyisoprene was formed per 1 molecule of an organolithium compound (ia) produced through the reaction between cinnamyl alcohol and sec-butyllithium, the efficiency of the organolithium compound (ia) as a polymerization initiator was 13%.
   Further, the number of end hydroxyl groups in the produced polyisoprene was measured with the HPLC and resultantly was 0.95 per one molecule.

Example 5: Production of polystyrene having a hydroxyl group at an end
(1) Anionic polymerization was carried out by: controlling the temperature in a reaction vessel containing a reaction product mixture (about 30 ml) containing an organolithium compound (ia) produced through the same operation as described in the process (1) of Production Example 2 to 40°C: and thereafter adding 11.5 ml (100 millimoles) of a styrene monomer. The liquid in the vessel gradually changed from the state of uneven whitish brown to a uniform reddish brown solution and sedimentation occurred to some extent. After the polymerization reaction was continued for 1 hour at 40°C, 1 ml of methanol was added to the liquid after the reaction and thus the polymerization was terminated. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby polystyrene produced through polymerization was precipitated, and the produced polystyrene was recovered, dried, and thereafter subjected to GPC measurement. As a result, the number average molecular weight (Mn) was 7,200 and the molecular weight distribution (Mw/Mn) was 1.10. Assuming that 1 molecule of polystyrene was formed per 1 molecule of an organolithium compound (ia) produced through the reaction between cinnamyl alcohol and sec-butyllithium, the efficiency of the organolithium compound (ia) as a polymerization initiator was 70%.
   Further, the number of end hydroxyl groups in the produced polystyrene was measured with the HPLC and resultantly was 0.4 per one molecule.

Example 6: Production of polystyrene having a tertiary amino group at an end
(1) Anionic polymerization was carried out by: controlling the temperature in a reaction vessel containing a reaction product mixture (about 30 ml) containing an organolithium compound (ib) produced through the same operation as described in the process (1) of Production Example 3 to 40°C; and thereafter adding 11.5 ml (100 millimoles) of a styrene monomer. The liquid in the vessel gradually changed from an orange solution to a red solution. After the polymerization reaction was further continued for 2 hours at 40°C, 1 ml of methanol was added to the liquid after the reaction and thus the polymerization was terminated. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby polystyrene produced through polymerization was precipitated, and the produced polystyrene was recovered, dried, and thereafter subjected to GPC measurement. As a result, the number average molecular weight (Mn) was 15,200 and the molecular weight distribution (Mw/Mn) was 1.52. Assuming that 1 molecule of polystyrene was formed per 1 molecule of an organolithium compound (ib) produced through the reaction between N,N-diethyl cinnamyl amine and sec-butyllithium, the efficiency of the organolithium compound (ib) as a polymerization initiator was 34%.
   Further, the number of end tertiary amino groups in the produced polystyrene was measured with the HPLC and resultantly was 0.8 per one molecule.

Example 7: Production of polystyrene having a tertiary amino group at an end
(1) Anionic polymerization was carried out by: controlling the temperature in a reaction vessel containing a reaction product mixture (about 29 ml) containing an organolithium compound (ib) produced through the same operation as described in the process (1) of Production Example 4 to 40°C; and thereafter adding 11.5 ml (100 millimoles) of a styrene monomer. The liquid in the vessel gradually changed from an orange solution to a red solution. After the polymerization reaction was further continued for 2 hours at 40°C, 1 ml of methanol was added to the liquid after the reaction and thus the polymerization was terminated. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby polystyrene produced through polymerization was precipitated, and the produced polystyrene was recovered, dried, and thereafter subjected to GPC measurement. As a result, the number average molecular weight (Mn) was 13,400 and the molecular weight distribution (Mw/Mn) was 1.65. Assuming that 1 molecule of polystyrene was formed per 1 molecule of an organolithium compound (ib) produced through the reaction between N,N-diethyl cinnamyl amine and sec-butyllithium, the efficiency of the organolithium compound (ib) as a polymerization initiator was 78%.
   Further, the number of end tertiary amino groups in the produced polystyrene was measured with the HPLC and resultantly was 1.0 per one molecule.

Example 8: Production of a block copolymer having a tertiary amino group at an end
(1) A block copolymer comprising polystyrene having a tertiary amino group at an end and polyisoprene was produced in the same way as Example 7 except that, before methanol was added and the polymerization was terminated in the process (1) of Example 7, 10.0 ml (100 millimoles) of an isoprene monomer was added and the reaction was further forwarded for 2 hours at 40°C, successively 1 ml of methanol was added, and thus the polymerization was terminated. The liquid after the reaction was analyzed with the GC and the ¹H-NMR. As a result, no unreacted styrene and isoprene monomers were detected and the monomer conversion rate was 100%.
(2) The liquid after reaction obtained in the above process (1) was put into an excessive amount of methanol, thereby the polystyrene-polyisoprene block copolymer produced through polymerization was precipitated, and the produced copolymer was recovered, dried, and thereafter subjected to GPC measurement. As a result, the number average molecular weight (Mn) was 27,000 and the molecular weight distribution (Mw/Mn) was 1.30. It was confirmed that the polymer produced in Example 8 was a block copolymer from the fact that the number average molecular weight (Mn) of the polymer was larger than that of the polymer produced in Example 6.
The number of end tertiary amino groups in the produced block copolymer was measured with the HPLC and resultantly was 1.0 per one molecule.

Example 9: Production of heterotelechelic polystyrene having a tertiary amino group and a hydroxyl group at ends
(1) Polystyrene having a tertiary amino group and a hydroxyl group at ends was produced in the same way as the process (1) of Example 7 except that 1 ml of propylene oxide was added instead of adding methanol to the reaction product mixture and terminating the polymerization in the process (1) of Example 7.
   The liquid after the reaction was analyzed with the GC and the ¹H-NMR. As a result, the conversion rate of the styrene monomer was 100%.
(2) The liquid after reaction obtained in the above process (1) was put into an excessive amount of methanol, thereby the polystyrene produced through polymerization was precipitated, and the produced polystyrene was recovered, dried, and thereafter subjected to GPC measurement. As a result, the number average molecular weight (Mn) was 13,400 and the molecular weight distribution (Mw/Mn) was 1.65.
The numbers of end tertiary amino groups and hydroxyl groups in the produced polystyrene were measured with the HPLC and the TLC, and resultantly were 0.95 per one molecule, respectively.

Example 10: Production of polyisoprene having a tertiary amino group at an end
(1) Anionic polymerization was carried out by: controlling the temperature in a reaction vessel containing a reaction product mixture (about 29 ml) containing an organolithium compound (ib) produced through the same operation as described in the process (1) of Production Example 4 to 40°C; and thereafter adding 30.0 ml (300 millimoles) of an isoprene monomer. The liquid in the vessel stayed in the state of an orange solution. After the polymerization reaction was further continued for 2 hours at 40°C, 1 ml of methanol was added to the liquid after the reaction and thus the polymerization was terminated. The liquid after the reaction was analyzed with the GC and the ¹H-NMR. As a result, no unreacted isoprene monomer was detected and the monomer conversion rate was 100%.
(2) The liquid after reaction obtained in the above process (1) was put into an excessive amount of methanol, thereby polyisoprene produced through polymerization was precipitated, and the produced polyisoprene was recovered, dried, and thereafter subjected to ¹H-NMR measurement. As a result, the number average molecular weight (Mn) was 29,000 and the molecular weight distribution (Mw/Mn) obtained through GPC measurement was 1.14. Assuming that 1 molecule of polyisoprene was formed per 1 molecule of an organolithium compound (ib) produced through the reaction between N,N-diethyl cinnamyl amine and sec-butyllithium, the efficiency of the organolithium compound (ib) as a polymerization initiator was 70%.
   Further, the number of end tertiary amino groups in the produced polyisoprene was measured with the HPLC and the TLC, and resultantly was 1.0 per one molecule.

Comparative Example 1
(1) The temperature in a reaction vessel containing a reaction product mixture (about 26 ml) obtained through the same operation as described in the process (1) of Comparative Production Example 1 was set at 40°C, thereafter 11.5 ml (100 millimoles) of a styrene monomer was added and maintained at the temperature for 2 hours, and then 1 ml of methanol was added. The liquid thereby obtained was analyzed with the GC and the ¹H-NMR. As a result, almost all of the styrene monomer remained unreacted and the conversion rate was 0%. Therefore, a polymer was not precipitated even when the obtained liquid was put into an excessive amount of methanol.
(2) From the results of aforementioned Comparative Production Example 1 and Comparative Example 1 here, it is understood that, in order to react a β-substituted styrene derivative (ii) such as cinnamyl alcohol and an organolithium compound (iii) such as sec-bytyllithium with each other and form an organolithium compound (i) (to produce a reaction product mixture containing an organolithium compound (i)), it is necessary to use the organolithium compound (iii) in the amount exceeding n moles (n represents the number n of hydrogen atoms bonding to the heteroatom A in the aforementioned general formula (iii)) per one mole of the β-substituted styrene derivative (ii).

Comparative Example 2
(1) After a gas in a dried glass reaction vessel was replaced with a nitrogen gas, 268 mg (2.0 millimoles) of cinnamyl alcohol was put into the reaction vessel, successively 19 ml of cyclohexane and 6 ml of hexane were put into the reaction vessel as a solvent, and thus the cinnamyl alcohol was dissolved. The obtained solution was cooled to a temperature of 0°C in the vessel while the solution was stirred, and thereafter 11.5 ml (100 millimoles) of a styrene monomer was added. Successively, 4.2 ml of a cyclohexane solution of sec-butyllithium (4.0 millimoles as sec-butyllithium) was slowly added by dropping while spending 5 minutes, the reaction was continued for one hour while the solution was stirred and the temperature in the vessel was maintained at 0°C, thereafter the solution was heated to 40°C, further the reaction was forwarded for 2 hours while the solution was stirred, successively 1 ml of methanol was added, and thus the polymerization was terminated. At the time of adding the cyclohexane solution of the sec-butyllithium in the above case, the solution in the vessel changed to a reddish brown solution. The liquid after the reaction was analyzed with the GC and the ¹H-NMR. As a result, no unreacted styrene monomer was detected and the monomer conversion rate was 100%.
(2) The liquid after reaction obtained in the above process (1) was put into an excessive amount of methanol, thereby the polystyrene produced through polymerization was precipitated, and the produced polystyrene was recovered, dried, and thereafter subjected to GPC measurement. As a result, the number average molecular weight (Mn) was 7,200 and the molecular weight distribution (Mw/Mn) was 1.10. The number of end hydroxyl groups in the produced polystyrene was measured with the HPLC and resultantly was 0 per one molecule, and thus the produced polystyrene had no end hydroxyl group.
(3) From the result of Comparative Example 2 here, it is understood that a β-substituted styrene derivative (ii) such as cinnamyl alcohol and an organolithium compound (iii) such as sec-butyllithium do not smoothly react with each other when an unsaturated monomer exists in the reaction system, thereby an organolithium compound (i) is not formed, and hence an end-functionalized polymer is not produced.

### Industrial Applicability

A method according to the present invention: makes it possible to produce an end-functionalized polymer easily, smoothly, and economically; and thus has high industrial applicability.
An end-functionalized polymer produced by a method according to the present invention can be effectively used: for the production of, for example, an adhesive (including a pressure sensitive adhesive, a contact adhesive, a laminate adhesive, and an assembly adhesive), a sealant (for example, an architectural urethane sealant or the like), a coating material (for example, a top coat for an automobile, an epoxy primer for metal, a polyester coil coating material, an alkyd maintenance coating material, or the like), a film (for example, a film requiring heat resistance and resistance to solvent), various kinds of thermoplastic resin molded articles and thermosetting resin molded articles (for example, a thermoplastic polyurethane roller formed by injection molding or the like, a thermosetting resin automobile bumper formed by reaction injection molding, a partition board, and the like) and others; and as a modifier to improve the impact resistance, the flexibility, and the like of another polymer.
Further, a functionalized anionic polymerization initiator according to the present invention can be effectively used for the production of such an end-functionalized polymer.

## Claims

1. A method for producing an end-functionalized polymer, wherein an anionically polymerizable monomer is anionically polymerized by using, as a polymerization initiator, an organolithium compound represented by the following general formula (i); 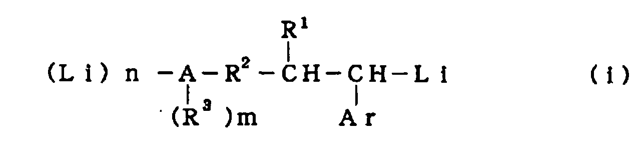 wherein: A represents a heteroatom selected from among an oxygen atom, a nitrogen atom, a sulfur atom, and a phosphorus atom; Ar represents an optionally substituted aryl group; R¹ represents a C₁₋₁₀ alkyl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2.

2. A method for producing an end-functionalized polymer, wherein a β-substituted styrene derivative represented by the following general formula (ii); 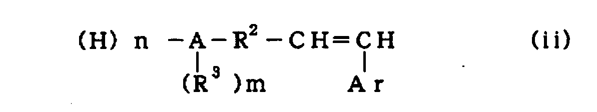 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii);
R¹ - Li (iii),
wherein R¹ represents a C₁₋₁₀ alkyl group, while the amount of the organolithium compound represented by the general formula (iii) is controlled to more than n moles (here, n represents the same numeral as n expressed in the general formula (ii)) per one mole of the β-substituted styrene derivative represented by the general formula (ii), and thereafter an anionically polymerizable monomer is anionically polymerized under the existence of the obtained reaction product mixture.

3. The production method according to Claim 2, wherein the β-substituted styrene derivative represented by the general formula (ii) is reacted with the organolithium compound represented by the general formula (iii), while the amount of the organolithium compound is controlled to more than n moles to not more than (n+1) moles (here, n represents the same numeral as n expressed in the general formula (ii)) per one mole of the β-substituted styrene derivative, and thereafter an anionically polymerizable monomer is anionically polymerized under the existence of the obtained reaction product mixture.

4. The production method according to any one of Claims 1 to 3, wherein the production method further includes a process of reacting the living anionic chain end of the produced end-functionalized polymer with at least one kind of functional capping agent selected from among an alkylene oxide compound, a carbonyl compound, an imine compound, a mercapto compound, and epichlorohydrin.

5. The production method according to any one of Claims 1 to 3, wherein the production method further includes a process of reacting a multi-functional coupling agent with the living anionic chain end.

6. A functionalized anionic polymerization initiator represented by the following general formula (i); 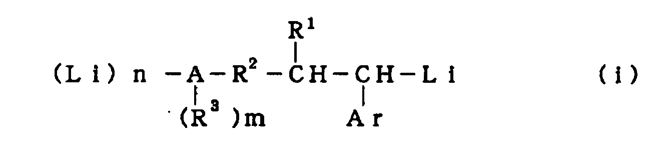 wherein: A represents a heteroatom selected from among an oxygen atom, a nitrogen atom, a sulfur atom, and a phosphorus atom; Ar represents an optionally substituted aryl group; R¹ represents a C₁₋₁₀ alkyl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2.

7. A method for producing a functionalized anionic polymerization initiator, wherein a β-substituted styrene derivative represented by the following general formula (11); 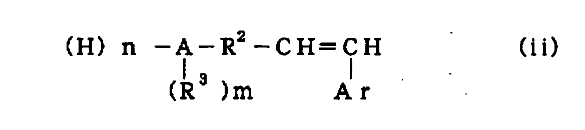 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii);
R¹ - Li (iii)
wherein R¹ represents a C₁₋₁₀ alkyl group, while the amount of the organolithium compound is controlled to more than n moles (here, n represents the same numeral as n expressed in the general formula (ii)) per one mole of the β-substituted styrene derivative.

8. A method for producing a functionalized anionic polymerization initiator, wherein a β-substituted styrene derivative represented by the following general formula (ii); 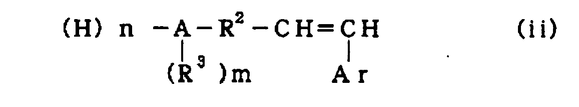 wherein: A represents a heteroatom selected from among an oxygen atom, a nitrogen atom, a sulfur atom, and a phosphorus atom; Ar represents an optionally substituted aryl group; R² represents a C₁₋₁₀ alkylene group; R³ represents a C₁₋₁₀ alkyl group or a protective group for the functional group -A-H (A is the heteroatom); and when the heteroatom A is an oxygen atom or a sulfur atom, then m and n are 0 or 1 respectively and the sum of m and n is 1, and when the heteroatom A is a nitrogen atom or a phosphorus atom, then m and n are 0, 1, or 2 respectively and the sum of m and n is 2, is reacted with an organolithium compound represented by the following general formula (iii);
R¹ - Li (iii),
wherein R¹ represents a C₁₋₁₀ alkyl group, while the amount of the organolithium compound is controlled to more than n moles to not more than (n+1) moles (here, n represents the same numeral as n expressed in the general formula (ii)) per one mole of the β-substituted styrene derivative.

9. The end-functionalized polymer produced by the production method according to any one of Claims 1 to 5.
